# EUROPEAN PATENT SPECIFICATION

(11) **EP 3 501 263 B1**
(45) Date of publication and mention of the grant of the patent: **17.04.2024**
(21) Application number: 16914134.8
(22) Date of filing: 22.08.2016
(51) Int. Cl.: A01G 7/02, A01G 9/18

(54) **CARBON DIOXIDE SUPPLY DEVICE**
KOHLENDIOXIDVERSORGUNGSVORRICHTUNG
DISPOSITIF D'ALIMENTATION EN DIOXYDE DE CARBONE

(43) Date of publication of application: 26.06.2019
(73) Proprietor: Futaba Industrial Co., Ltd., Okazaki-shi, Aichi 444-8558 (JP)
(72) Inventor: SAITO, Takashi, Okazaki-shi, Aichi 444-8558 (JP); YUMIDATE, Masaki, Okazaki-shi, Aichi 444-8558 (JP)
(74) Representative: Otten, Roth, Dobler & Partner mbB Patentanwälte
(86) International application number: PCT/JP2016/074406
(87) International publication number: WO 2018/037459

(56) References cited:
- WO-A1-2015/098252
- JP-A- S58 220 626
- JP-A- 2012 029 688
- JP-A- 2013 074 887
- JP-A- 2013 074 887
- JP-A- 2015 126 708
- US-A- 5 713 154

## Description

### TECHNICAL FIELD

The present disclosure relates to a carbon dioxide supply device that accumulates carbon dioxide and supplies the accumulated carbon dioxide to a greenhouse.

### BACKGROUND ART

A carbon dioxide supply device in Patent Document 1 accumulates carbon dioxide included in an exhaust gas of a boiler for heating gardening facilities during the night in a tank. The carbon dioxide supply device supplies carbon dioxide accumulated in the tank to the gardening facilities during the day. This facilitates photosynthesis of horticultural crops.

### PRIOR ART DOCUMENTS

### PATENT DOCUMENTS

Patent Document 1: Japanese Unexamined Patent Application Publication No. 2013-74887 WO 2015/098252 A1 also discloses a state of the art carbon dioxide supply device.

### SUMMARY OF THE INVENTION

### PROBLEMS TO BE SOLVED BY THE INVENTION

In the carbon dioxide supply device of Patent Document 1, an amount of carbon dioxide accumulated in the tank may reach an upper limit at dawn or the like. In a case like this, it becomes unable to accumulate carbon dioxide, despite during heating by the boiler.

It is desirable to make more effective use of carbon dioxide produced by heating.

### MEANS FOR SOLVING THE PROBLEMS

A carbon dioxide supply device in one aspect of the present disclosure accumulates carbon dioxide included in an exhaust gas produced by combustion for heating a greenhouse for cultivating plants. The carbon dioxide supply device comprises an accumulation unit, an accumulation flow path, a supply flow path, and a control unit. The accumulation unit accumulates carbon dioxide included in the exhaust gas. The accumulation flow path guides the exhaust gas to the accumulation unit. The supply flow path guides air to the accumulation unit, and guides the air that has passed through the accumulation unit to the greenhouse. The control unit controls flow of the exhaust gas and the air.

The control unit executes accumulation control and supply control. In the accumulation control, during a heating period in which the heating is performed, the control unit causes the exhaust gas produced by heating to pass through the accumulation unit via the accumulation flow path, so as to accumulate carbon dioxide included in the exhaust gas in the accumulation unit. In the supply control, during a period in which heating is not performed, the control unit causes air to pass through the accumulation unit via the supply flow path and then to flow into the greenhouse, so as to supply carbon dioxide accumulated in the accumulation unit to the greenhouse. Further, during the heating period, if a specified start condition is satisfied during the accumulation control, the control unit executes a refill process wherein the supply control and the accumulation control are executed alternately.

According to the configuration as such, if the start condition is satisfied during the accumulation control in the heating period, the refill process is started. By the refill process, supply of carbon dioxide accumulated in the accumulation unit to the greenhouse and accumulation of carbon dioxide to the accumulation unit are performed alternately. Therefore, a total amount of carbon dioxide accumulated in the accumulation unit during the heating period can be made larger than capacity of the accumulation unit. Also, it is possible to supply carbon dioxide larger than the capacity of the accumulation unit to the greenhouse over an execution period of the refill process and the period during which heating of the greenhouse is not performed. In other words, it is possible to supply more carbon dioxide produced by heating to the greenhouse via the accumulation unit. Therefore, it is possible to more effectively use carbon dioxide produced by heating.

In the configuration described above, the carbon dioxide supply device may further comprise a detection unit that detects an amount of carbon dioxide accumulated in the accumulation unit. The start condition may be that the amount of the accumulated carbon dioxide detected by the detection unit reaches a specified threshold.

In the configuration described above, the start condition may be that time during which the accumulation control is executed reaches a specified threshold.

In the configuration described above, the start condition may be that a specified time comes.

According to the configuration as such, it is possible to start the refill process at a more appropriate timing.

In the configuration described above, the carbon dioxide supply device may further comprise a detection unit that detects an amount of carbon dioxide accumulated in the accumulation unit. The control unit may start the supply control when the amount of the accumulated carbon dioxide detected by the detection unit during the accumulation control in the refill process reaches a specified supply threshold. The control unit may start the accumulation control when the amount of the accumulated carbon dioxide detected by the detection unit during the supply control in the refill process falls below a specified accumulation threshold. The accumulation threshold may be smaller than the supply threshold.

According to the configuration as such, it is possible to start the supply control and the accumulation control at a more appropriate timing during execution of the refill process.

In the configuration described above, the carbon dioxide supply device may further comprise a bypass flow path that guides part of the air guided to the accumulation unit by the supply flow path to the greenhouse without passing through the accumulation unit. The control unit may adjust an amount of the air guided by the bypass flow path in the supply control so as to adjust the amount of the air passing through the accumulation unit. The control unit, in the supply control of the refill process, may set the amount of the air passing through the accumulation unit to be larger than a specified level.

According to the configuration as such, in the supply control of the refill process, it is possible to more quickly flow carbon dioxide accumulated in the accumulation unit to outside. As a result, in the refill process, it is possible to more promptly switch from the supply control to the accumulation control. Therefore, it is possible to supply more carbon dioxide to the greenhouse via the accumulation unit.

In the configuration described above, the accumulation unit may include at least one adsorption unit that adsorbs carbon dioxide. The at least one adsorption unit may include an accumulation surface and a supply surface on its outer surface. In the accumulation control, the exhaust gas passing through the accumulation unit may flow into the at least one adsorption unit via the accumulation surface, and then flow out from the adsorption unit via the supply surface, so that carbon dioxide included in the exhaust gas may be adsorbed by the adsorption unit and accumulated in the accumulation unit. In the supply control, the air passing through the accumulation unit may flow into the at least one adsorption unit via the supply surface, and then flow out from the adsorption unit via the accumulation surface, so that the carbon dioxide adsorbed by the adsorption unit may flow out with the air, and the carbon dioxide accumulated in the accumulation unit may be supplied to the greenhouse.

On the outer surface of the above-described adsorption unit of carbon dioxide, a portion through which the exhaust gas or air that flows into the adsorption unit passes is defined as an inflow surface, and a portion through which the exhaust gas or air that flows out from the adsorption unit passes is defined as an outflow surface. Also, it is assumed that the inflow surface and the outflow surface in the accumulation control are the same as the inflow surface and the outflow surface in the supply control, respectively. It is also assumed that the accumulation control and the supply control are executed alternately in a short cycle. At this time, in the adsorption unit, there is a possibility that a high concentration portion having high concentration of carbon dioxide and a low concentration portion having low concentration of carbon dioxide are distributed in a multilayered manner from the inflow surface to the outflow surface.

During the supply control, the high concentration portion and the low concentration portion in the adsorption unit move from the inflow surface to the outflow surface of air. In case that the low concentration portion is in contact with the outflow surface, it is considered that the concentration of carbon dioxide flowing out from the adsorption unit decreases. On the other hand, in case that the high concentration portion is in contact with the outflow surface, it is considered that the concentration of carbon dioxide flowing out from the adsorption unit increases. Therefore, when the high concentration portion and the low concentration portion are distributed in a multilayered manner in the adsorption unit, there is a possibility that the concentration of carbon dioxide flowing out from the adsorption unit becomes unstable.

In contrast, in the configuration described above, the accumulation surface of the adsorption unit is the inflow surface of the exhaust gas, and the supply surface is the outflow surface of the exhaust gas, during the accumulation control. In the supply control, contrary to the above, the supply surface is the inflow surface of the air, and the accumulation surface is the outflow surface of the air. Therefore, even if the accumulation control and the supply control are executed alternately in a short cycle, it is possible to maintain the adsorption unit such that the high concentration portion is on the accumulation surface side, and the low concentration portion is on the supply surface side. As a result, in the supply control, fluctuation in the concentration of carbon dioxide flowing out from the accumulation surface of the adsorption unit can be suppressed. Thus, it is possible to supply carbon dioxide at a stable concentration.

### EXPLANATION OF REFERENCE NUMERALS

1 ... carbon dioxide supply device, 2 ... greenhouse, 3 ... heater, 10 ... flow path control unit, 30 ... blower, 40 ... accumulation unit, 41 ... adsorption member, 43 ... adsorption unit, 43a ... accumulation surface, 43b ... supply surface, 45 ... accumulation surface sensor, 46 ... supply surface sensor, 60 ... cooling valve, 61 ... inflow valve, 61 ... cooling valve, 62 ... first outside valve, 63 ... second outside valve, 64 ... first inside valve, 65 ... second inside valve, 70 ... heater flow path, 71 ... water tank flow path, 72 ... blower flow path, 73 ... inflow path, 74 ... outside flow path, 75 ... inside flow path, 76 ... control flow path, 76a ... accumulation section, 76b ... accumulation branch section, 76c ... supply branch section, 76d ... supply section, 100 ... accumulation flow path, 101 ... cooling flow path, 102 ... high-speed supply flow path, 103 ... low-speed supply flow path, 103a ... bypass flow path.

### BRIEF DESCRIPTION OF THE DRAWINGS

FIG. 1 is a block diagram of a carbon dioxide supply device of the present embodiment.
FIG. 2A is an explanatory view showing a configuration of an accumulation unit.
FIG. 2B is an explanatory view showing a configuration of an adsorption member.
FIG. 3A is an explanatory view of an accumulation flow path and a cooling flow path.
FIG. 3B is an explanatory view of a high-speed supply flow path and a low-speed supply flow path.
FIG. 4A is an explanatory view of a timing of execution and the like of accumulation control and supply control.
FIG. 4B is an explanatory view of a supply control process.
FIG. 5A is an explanatory view showing a distribution of a high concentration portion and a low concentration portion of carbon dioxide in an adsorption unit when an inflow surface and an outflow surface in the accumulation control are the same as those in the supply control.
FIG. 5B is an explanatory view showing a distribution of a high concentration portion and a low concentration portion of carbon dioxide in the adsorption unit of the present embodiment,

### MODE FOR CARRYING OUT THE INVENTION

Hereinafter, an embodiment of the present disclosure will be described with reference to the accompanying drawings. Embodiments of the present disclosure are not limited to the embodiment described below at all, and may take various forms as long as they fall within the technical scope of the present disclosure.

### [Description of configuration]

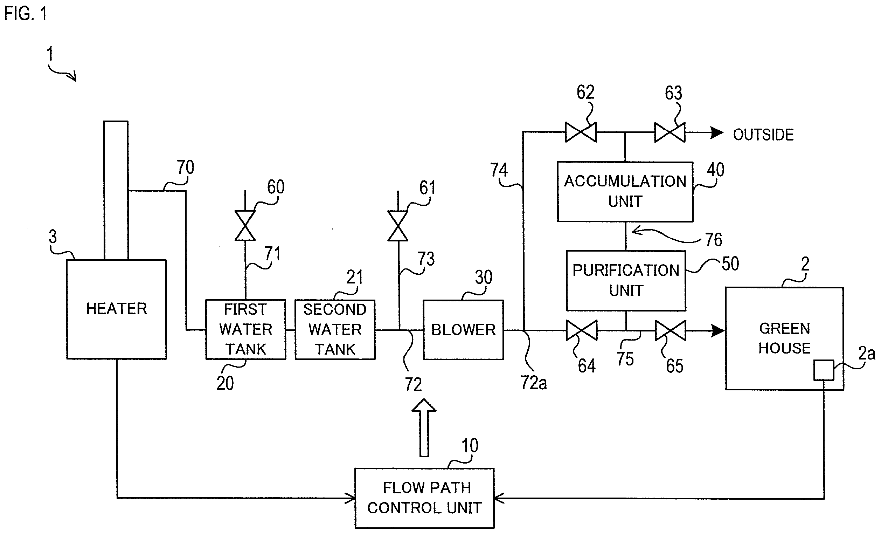

A carbon dioxide supply device 1 of the present embodiment in FIG. 1 is used in a greenhouse 2 for cultivating plants. Specifically, the greenhouse 2 may be used for protected horticulture. The greenhouse 2 is provided with a heater 3 for heating an inside of the greenhouse 2 (hereinafter, simply referred to as inside) in order to facilitate growth of plants. The heater 3 heats the inside during the night, for example, by burning fuel such as kerosene and heavy oil.

The carbon dioxide supply device 1 accumulates carbon dioxide included in an exhaust gas produced by heating by the heater 3 during the night. The carbon dioxide supply device 1 supplies the accumulated carbon dioxide to the inside during the day. Therefore, photosynthesis of plants in the inside is facilitated.

The carbon dioxide supply device 1 includes a flow path control unit 10, first and second water tanks 20, 21, a blower 30, an accumulation unit 40, and a purification unit 50.

The flow path control unit 10 may be configured mainly of a well-known computer including a CPU, a RAM, a ROM, a storage device, etc. The storage device may be a rewritable nonvolatile storage device (for example, HDD or the like). The CPU of the flow path control unit 10 executes various processes by executing programs loaded from the storage device into the RAM. As a result, the carbon dioxide supply device 1 is controlled. The storage device and the RAM correspond to non-transitory tangible recording media. The flow path control unit 10 may include many digital circuits. The flow path control unit 10 may implement various processes using hardware instead of software.

The flow path control unit 10 receives an ignition signal from the heater 3. The ignition signal indicates whether heating is being performed in the heater 3. The flow path control unit 10 also receives concentration signals from an inside sensor 2a, a supply surface sensor, and an accumulation surface sensor. The inside sensor 2a detects concentration of carbon dioxide in the inside. The supply surface sensor and the accumulation surface sensor detect concentrations of carbon dioxide inside the carbon dioxide supply device 1. The concentration signals from these sensors indicate concentrations of carbon dioxide detected by the sensors. The supply surface sensor and the accumulation surface sensor will be described later.

The carbon dioxide supply device 1 includes a heater flow path 70, a water tank flow path 71, a blower flow path 72, an inflow path 73, an outside flow path 74, an inside flow path 75, and a control flow path 76. The carbon dioxide supply device 1 also includes a cooling valve 60, an inflow valve 61, first and second outside valves 62, 63, and first and second inside valves 64, 65.

The heater flow path 70 connects the heater 3 and the first water tank 20. The water tank flow path 71 also connects the outside of the greenhouse 2 (hereinafter, simply referred to as outside) and the first water tank 20. The water tank flow path 71 includes a cooling valve 60. The cooling valve 60 opens and closes the water tank flow path 71.

One end of the blower flow path 72 is referred to as an upstream end, and the other end is referred to as a downstream end 72a. The blower flow path 72 is connected to the second water tank 21 at the upstream end. The blower 30 is provided in the blower flow path 72.

The inflow path 73 connects the outside and a branch point in the blower flow path 72. The branch point is provided between the upstream end and the blower 30 in the blower flow path 72. The inflow path 73 includes the inflow valve 61. The inflow valve 61 opens and closes the inflow path 73.

The outside flow path 74 is connected to the downstream end 72a of the blower flow path 72 at one end. The other end of the outside flow path 74 is connected to the outside. The outside flow path 74 includes the first and second outside valves 62, 63. The first outside valve 62 is positioned on the blower 30 side of the second outside valve 63. Each of the first and second outside valves 62, 63 opens and closes the outside flow path 74 at the position where the corresponding valve is provided.

The inside flow path 75 is connected to the downstream end 72a of the blower flow path 72 at one end. The other end of the inside flow path 75 is connected to the inside. The inside flow path 75 includes the first and second inside valves 64, 65. The first inside valve 64 is positioned on the blower 30 side of the second inside valve 65. Each of the first and second inside valves 64, 65 opens and closes the inside flow path 75 at the position where the corresponding valve is provided.

The control flow path 76 connects the inside flow path 75 and the outside flow path 74. More specifically, the control flow path 76 is connected to a branch point between the first and second inside valves 64, 65 in the inside flow path 75 at one end. The control flow path 76 is connected to a branch point between the first and second outside valves 62, 63 in the outside flow path 74 at the other end. The accumulation unit 40 and the purification unit 50 are provided in the control flow path 76. The accumulation unit 40 is disposed on the outside flow path 74 side of the purification unit 50.

When the blower 30 operates, gas existing in the blower flow path 72 is compressed. Thus, the gas flows down from the upstream end toward the downstream end 72a in the blower flow path 72. As a result, the exhaust gas discharged from the heater 3 flows in from the heater flow path 70. Also, the outside air flows in from the inflow path 73 or the water tank flow path 71. The exhaust gas or air is guided by the respective flow paths to the first and second water tanks 20, 21, to the purification unit 50, to the accumulation unit 40, and to the inside or outside. The exhaust gas or air may be caused to flow down, for example, by a fan or the like, instead of the blower 30.

The first and second water tanks 20, 21 cool and neutralize the exhaust gas. Each of the first and second water tanks 20, 21 stores an alkaline aqueous solution. Also, the first and second water tanks 20, 21 are connected by a connecting pipe. Also, the first water tank 20 is connected to either one of the heater flow path 70 and the water tank flow path 71, according to instructions from the flow path control unit 10. The exhaust gas or air flows into the first water tank 20 from the flow path connected to the first water tank 20.

The exhaust gas guided by the heater flow path 70, when flowing into the first water tank 20, passes through the aqueous solution stored in the first water tank 20. As a result, the exhaust gas is cooled. The exhaust gas passing through the first water tank 20 flows into the second water tank 21 via the connecting pipe, and passes through the aqueous solution stored in the second water tank 21. As a result, the exhaust gas is further cooled. Also, when the exhaust gas passes through the first and second water tanks 20, 21, sulfur oxide and the like included in the exhaust gas is neutralized.

The air guided by the water tank flow path 71 passes through the first and second water tanks 20, 21 in the same manner. As a result, the aqueous solutions stored in the first and second water tanks 20, 21 are cooled.

The second water tank 21 switches whether to connect to the blower flow path 72 according to instructions from the flow path control unit 10. In case that the second water tank 21 is connected to the blower flow path 72, the exhaust gas or air passing through the second water tank 21 flows to the blower flow path 72. In case that the second water tank 21 is not connected to the blower flow path 72, the exhaust gas or air does not flow to the blower flow path 72.

The accumulation unit 40 accumulates carbon dioxide included in the exhaust gas. Carbon dioxide accumulated in the accumulation unit 40 is supplied to the inside. Details of the accumulation unit 40 will be described later.

The purification unit 50 removes harmful substances (for example, sulfur oxide, nitrogen oxide, etc.) that adversely affect growth of plants from the exhaust gas. Specifically, for example, the purification unit 50 may include a filter or the like including granular activated carbon. The purification unit 50 may adsorb the harmful substance onto the granular activated carbon so as remove harmful substances included in the exhaust gas passing through the purification unit 50.

### [Description of accumulation unit]

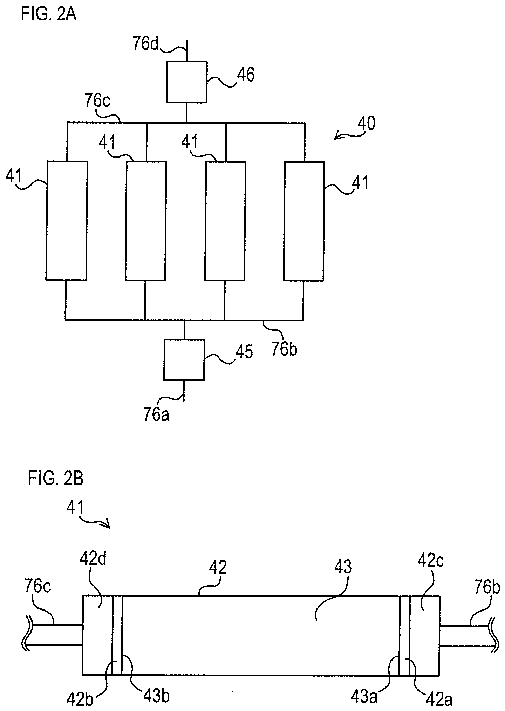

A configuration of the accumulation unit 40 will be described with reference to FIG. 2A. The accumulation unit 40 includes adsorption members 41, an accumulation surface sensor 45, and a supply surface sensor 46. In the present embodiment, the accumulation unit 40 includes four adsorption members 41 as an example. These adsorption members 41 are arranged in parallel with the control flow path 76. The accumulation unit 40 may include one adsorption member.

As shown in FIG. 2B, each of the four adsorption members 41 has a linearly extending elongated casing 42. In the present embodiment, the casing 42 has a cylindrical outer surface as an example. However, the casing 42 may have a polygonal columnar outer surface or the like. The outer surface of the casing 42 is made of a non-permeable material that does not allow gas such as exhaust gas and air to pass through. Also, the casing 42 is connected to the control flow path 76 at both ends.

The casing 42 has therein an arrangement area which is an elongated space similar to the shape of the casing 42. The arrangement area is provided in contact with side surfaces of the casing 42 and is provided with end spaces 42c, 42d between the arrangement area and ends of the casing 42. Both ends of the arrangement area are closed with lids 42a, 42b. The lids 42a, 42b are made of a permeable material that allows gas such as exhaust gas and air to pass through. An adsorption unit 43 that adsorbs carbon dioxide is arranged in the arrangement area. The adsorption unit 43 may be, for example, an aggregate of powdery or granular carbon dioxide adsorbent filled in the arrangement area. As an example, the adsorbent may be activated carbon. Besides this, the adsorbent may be, for example, zeolite or the like.

The adsorption unit 43 is provided with an accumulation surface 43a and a supply surface 43b on its outer surface. The accumulation surface 43a and the supply surface 43b form opposite ends of the adsorption unit 43. The accumulation surface 43a is in contact with the lid 42a, and the supply surface 43b is in contact with the lid 42b.

The control flow path 76 includes an accumulation section 76a, an accumulation branch section 76b, a supply branch section 76c, and a supply section 76d.

The accumulation section 76a is connected to the purification unit 50 at one end. The accumulation branch section 76b is connected to the other end of the accumulation section 76a at one end. The accumulation branch section 76b has one or more branch points, and connects the other end of the accumulation section 76a and respective ends on the accumulation surface 43a side of the four adsorption members 41.

The supply section 76d is connected to the outside flow path 74 at one end. The supply branch section 76c is connected to the other end of the supply section 76d at one end. The supply branch section 76c has one or more branch points, and connects the other end of the supply section 76d and respective ends on the supply surface 43b side of the four adsorption members 41.

Accumulation of carbon dioxide by the accumulation unit 40 is performed as follows. The exhaust gas passing through the purification unit 50 passes through the accumulation section 76a into the accumulation branch section 76b. Thereafter, the exhaust gas is guided to each of the four adsorption members 41 via the accumulation branch section 76b, and passes through each adsorption member 41. Then, the exhaust gas passes through the supply branch section 76c and the supply section 76d into the outside flow path 74.

The exhaust gas, when passing through each adsorption member 41, flows into the casing 42 from the end on the accumulation surface 43a side. The exhaust gas then passes through the end space 42c and the lid 42a into the adsorption unit 43 via the accumulation surface 43a. The exhaust gas flows down the adsorption unit 43 from the accumulation surface 43a toward the supply surface 43b. At this time, carbon dioxide included in the exhaust gas is adsorbed by the adsorption unit 43 (in other words, adsorbent forming the adsorption unit 43). As a result, carbon dioxide is accumulated in the adsorption unit 43. Thereafter, the exhaust gas flows out from the adsorption unit 43 via the supply surface 43b. The exhaust gas then passes through the lid 42b and the end space 42d into the supply branch section 76c.

Supply of carbon dioxide from the accumulation unit 40 is performed as below. Air flowing from the outside flow path 74 into the supply section 76d passes through the supply section 76d into the supply branch section 76c. The air is guided to each of the four adsorption members 41 via the supply branch section 76c and passes through each adsorption member 41. The air then passes through the accumulation branch section 76b and the accumulation section 76a into the purification unit 50.

The air, when passing through each adsorption member 41, flows into the casing 42 from the end on the supply surface 43b side. The air then passes through the end space 42d and the lid 42b into the adsorption unit 43 via the supply surface 43b. The air flows down the adsorption unit 43 from the supply surface 43b toward the accumulation surface 43a. At this time, carbon dioxide adsorbed by the adsorption unit 43 (in other words, adsorbent forming the adsorption unit 43) flows out to air. As a result, concentration of carbon dioxide in air increases. Thereafter, the air flows out from the adsorption unit 43 via the accumulation surface 43a. The air then passes through the lid 42a and the end space 42c into the accumulation branch section 76b. Guiding the air to the inside supplies carbon dioxide accumulated in the accumulation unit 40 to the inside.

In other words, the accumulation unit 40 accumulates and supplies carbon dioxide by simply bringing the adsorption unit 43 into contact with the exhaust gas or air without mechanical pressurization and heating. The accumulation unit 40 may accumulate and supply carbon dioxide by a method including mechanical pressurization such as a pressure swing method, for example. Also, the accumulation unit 40 may accumulate and supply carbon dioxide with heating. In such a case, for example, lithium composite oxide may be used as a member that accumulates carbon dioxide.

The accumulation unit 40 also includes the above-described accumulation surface sensor 45 and supply surface sensor 46.

The accumulation surface sensor 45 detects concentration of carbon dioxide included in gas flowing from the accumulation surface 43a side into each adsorption member 41, and gas flowing out from the accumulation surface 43a side of each adsorption member 41. The accumulation surface sensor 45 is provided in the accumulation section 76a. The accumulation surface sensor 45 may be provided in the accumulation branch section 76b. It is preferable that the accumulation surface sensor 45 is arranged at a connecting portion between the accumulation section 76a and the accumulation branch section 76b, or near the connecting portion.

The supply surface sensor 46 detects concentration of carbon dioxide included in gas flowing from the supply surface 43b side into each adsorption member 41, and gas flowing out from the supply surface 43b side of each adsorption member 41. The supply surface sensor 46 is provided in the supply section 76d. The supply surface sensor 46 may be provided in the supply branch section 76c. It is preferable that the supply surface sensor 46 is arranged at a connecting portion between the supply section 76d and the supply branch section 76c, or near the connecting portion.

### [Description of operation]

The flow path control unit 10 of the carbon dioxide supply device 1 executes accumulation control, cooling control, and supply control. The supply control includes two types of controls, that is, high-speed supply control and low-speed supply control. The flow path control unit 10 accumulates and supplies carbon dioxide by combining these controls. First, contents of these controls will be described.

### (1) Description of each control

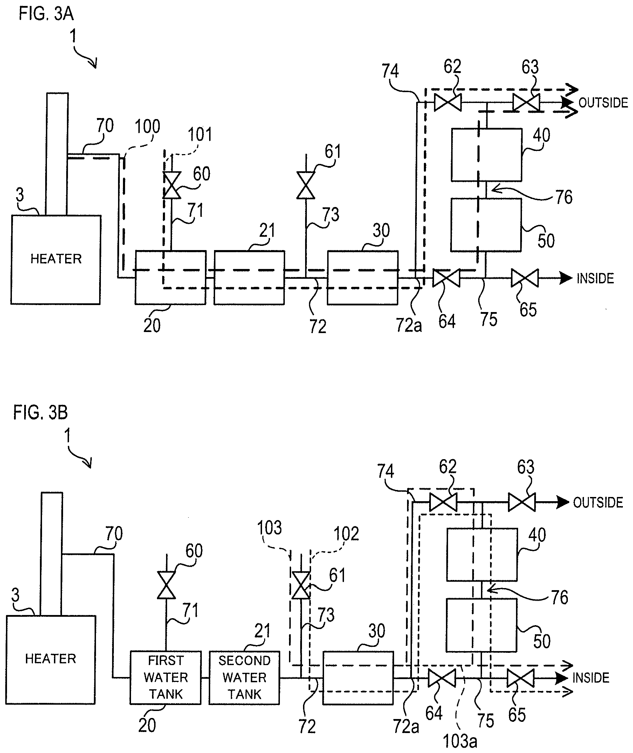

In the accumulation control, carbon dioxide included in the exhaust gas from the heater 3 is accumulated in the accumulation unit 40. During the accumulation control, the flow path control unit 10 opens the second outside valve 63 and the first inside valve 64. Also, the flow path control unit 10 closes the cooling valve 60, the inflow valve 61, the first outside valve 62, and the second inside valve 65. The flow path control unit 10 also connects the first water tank 20 to the heater flow path 70. Further, the flow path control unit 10 connects the second water tank 21 to the blower flow path 72. As a result, an accumulation flow path 100 of FIG. 3A is formed.

The flow path control unit 10 operates the blower 30 to flow down the exhaust gas from the heater 3 along the accumulation flow path 100. At this time, the exhaust gas sequentially passes through the first and second water tanks 20, 21, the purification unit 50, and the accumulation unit 40. Thereafter, the exhaust gas flows to the outside.

The exhaust gas, when passing through the first and second water tanks 20, 21, is cooled and neutralized. When the exhaust gas passes through the purification unit 50, harmful substances are removed from the exhaust gas. When the exhaust gas passes through the accumulation unit 40, carbon dioxide included in the exhaust gas is accumulated in the accumulation unit 40.

In the cooling control, the aqueous solutions stored in the first and second water tanks 20, 21 are cooled. During the cooling control, the flow path control unit 10 opens the cooling valve 60 and the first and second outside valves 62, 63. The flow path control unit 10 closes the inflow valve 61, and the first and second inside valves 64, 65. Also, the flow path control unit 10 connects the first water tank 20 to the water tank flow path 71. The flow path control unit 10 also connects the second water tank 21 to the blower flow path 72. As a result, a cooling flow path 101 of FIG. 3A is formed.

The flow path control unit 10 operates the blower 30 to cause the outside air to flow in through the water tank flow path 71 and flow down along the cooling flow path 101. At this time, the air passes through the first and second water tanks 20, 21. Thereafter, the air flows out to the outside.

By the outside air passing through the first and second water tanks 20, 21, the aqueous solutions stored in the first and second water tanks 20, 21 are cooled. The cooling control may be executed by causing the inside air to flow in from the water tank flow path 71. Also, the air used for cooling may be allowed to flow out to the inside.

In the high-speed supply control and the low-speed supply control, carbon dioxide accumulated in the accumulation unit 40 is supplied to the inside. In the high-speed supply control, carbon dioxide is supplied at a faster pace as compared to a case of the low-speed supply control.

During the high-speed supply control, the flow path control unit 10 opens the inflow valve 61, the first outside valve 62, and the second inside valve 65. The flow path control unit 10 closes the cooling valve 60, the second outside valve 63, and the first inside valve 64. The flow path control unit 10 also disconnects the second water tank 21 from the blower flow path 72. As a result, the high-speed supply flow path 102 of FIG. 3B is formed.

The flow path control unit 10 operates the blower 30 to cause the outside air to flow in from the inflow path 73 and flow down along the high-speed supply flow path 102. At this time, the air sequentially passes through the accumulation unit 40 and the purification unit 50 and flow to the inside.

During the low-speed supply control, the flow path control unit 10 opens the inflow valve 61, the first outside valve 62, and the first and second inside valves 64, 65. The flow path control unit 10 closes the cooling valve 60, and the second outside valve 63. The flow path control unit 10 also disconnects the second water tank 21 from the blower flow path 72. As a result, the low-speed supply flow path 103 of FIG. 3B is formed. The low-speed supply flow path 103 is configured by adding a bypass flow path 103a to the high-speed supply flow path 102.

The flow path control unit 10 operates the blower 30 to cause the outside air to flow in from the inflow path 73 and flow down along the low-speed supply flow path 103. At this time, the air branches at a downstream end portion 72a of the blower flow path 72. Part of the air sequentially passes through the accumulation unit 40 and the purification unit 50 to the outside. The rest of the air passes through the bypass flow path 103a to the inside, without passing through the accumulation unit 40 and the purification unit 50.

During the high-speed supply control, all the air flowing from the outside passes through the accumulation unit 40. On the other hand, during the low-speed supply control, part of the air passes through the accumulation unit 40. The rest of the air passes through the bypass flow path 103a, without passing through the accumulation unit 40. Therefore, in the low-speed supply control, an amount of the air passing through the accumulation unit 40 is smaller than that of the high-speed supply control. In other words, pressure when the air passes through the accumulation unit 40 is small. Thus, during the low-speed supply control, carbon dioxide flows out from the accumulation unit 40 at a slower pace, as compared to the case in the high-speed supply control. Also, the air passing through the accumulation unit 40 flows to the inside after merging with the air passing through the bypass flow path 103a. Therefore, during the low-speed supply control, lower concentration of carbon dioxide is supplied to the inside, as compared to the case in the high-speed supply control.

### (2) Description of supply control process

As described above, the heater 3 heats the inside during the night. Specifically, heating may be performed over a heating period from evening to morning. The carbon dioxide supply device 1 executes the accumulation control during the heating period so as to accumulate carbon dioxide included in the exhaust gas produced by the heating in the accumulation unit 40. In a non-heating period from morning to evening, the heating by the heater 3 is not performed. The carbon dioxide supply device 1 executes the supply control during the non-heating period so as to supply carbon dioxide accumulated in the accumulation unit 40 to the inside.

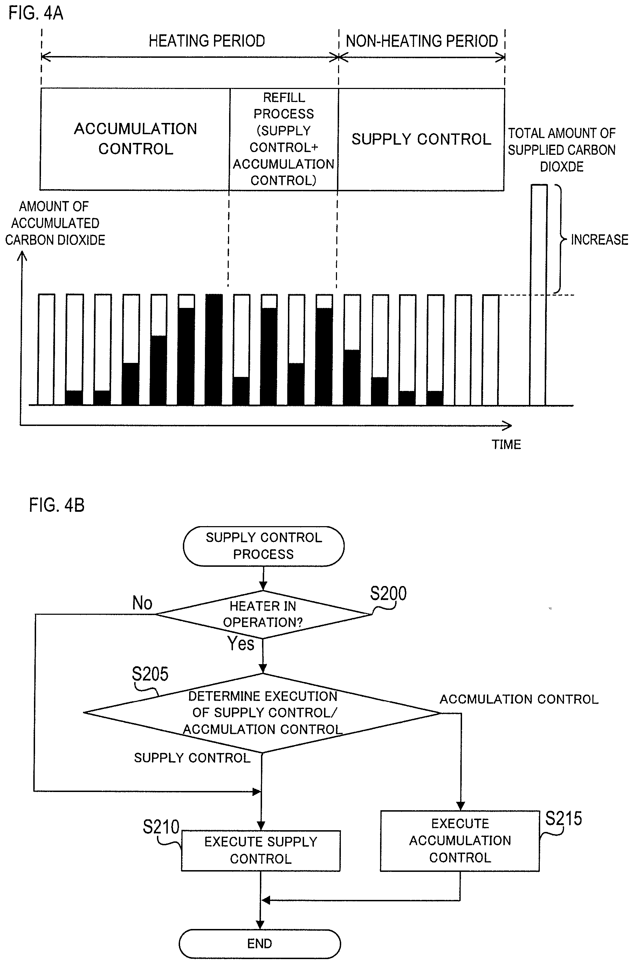

However, when an amount of carbon dioxide accumulated in the accumulation unit 40 reaches an upper limit, accumulation of carbon dioxide in the accumulation unit 40 becomes impossible. Therefore, as shown in FIG. 4A, the carbon dioxide supply device 1 starts a refill process when a start condition is satisfied during the heating period. The start condition is that the amount of carbon dioxide accumulated in the accumulation unit 40 reaches a specified level. Specifically, the start condition is that the amount of the accumulated carbon dioxide is equal to or larger than a specified start threshold. The start threshold may be an upper limit value of the amount of carbon dioxide accumulated in the accumulation unit 40, or a value slightly lower than the upper limit value.

In the refill process, the supply control and the accumulation control are executed alternately. As a result, a total amount of carbon dioxide accumulated in the accumulation unit 40 during the heating period, and a total amount of carbon dioxide supplied from the accumulation unit 40 to the inside increase,

A series of processing for accumulating and supplying carbon dioxide is implemented by the flow path control unit 10 executing the supply control process. Hereinafter, the supply control process will be described with reference to FIG. 4B. The supply control process is periodically executed by the flow path control unit 10 during the operation of the carbon dioxide supply device 1.

In S200, the flow path control unit 10, based on the ignition signal, determines whether heating by the heater 3 is performed. If it is positively determined (S200: Yes), then the flow path control unit 10 proceeds to S205. If it is negatively determined (S200: No), then the flow path control unit 10 proceeds to S210.

In S205, the flow path control unit 10, based on the amount of carbon dioxide accumulated in the accumulation unit 40, determines which of the accumulation control and the supply control should be executed. The amount of the accumulated carbon dioxide is detected based on results of detection by the accumulation surface sensor 45 and the supply surface sensor 46 provided in the accumulation unit 40.

If the accumulation control is being executed, then concentration of carbon dioxide in the exhaust gas before passing through the accumulation unit 40 (hereinafter, referred to as exhaust gas concentration before passing) is detected by the accumulation surface sensor 45. Also in this case, concentration of carbon dioxide in the exhaust gas after passing through the accumulation unit 40 (hereinafter, referred to as exhaust gas concentration after passing) is detected by the supply surface sensor 46. The low path control unit 10, based on a value obtained by subtracting the exhaust gas concentration before passing from the exhaust gas concentration after passing (hereinafter, referred to as exhaust gas concentration subtraction value), estimates the amount of the accumulated carbon dioxide. As the value increases, the amount of the accumulated carbon dioxide is estimated to be larger. The flow path control unit 10 may estimate the amount of the accumulated carbon dioxide based on the exhaust gas concentration after passing, without considering the exhaust gas concentration before passing. In this case, it is estimated that, as the exhaust gas concentration after passing increases, the amount of the accumulated carbon dioxide increases.

If the supply control is being executed, then concentration of carbon dioxide in the air before passing the accumulation unit 40 (hereinafter, referred to as air concentration before passing) is detected by the supply surface sensor 46. Also in this case, concentration of carbon dioxide in the air after passing the accumulation unit 40 (hereinafter, referred to as air concentration after passing) is detected by the accumulation surface sensor 45. The flow path control unit 10, based on a value obtained by subtracting the air concentration before passing from the air concentration after passing (hereinafter, referred to as air concentration subtraction value), estimates the amount of the accumulated carbon dioxide. As the value increases, the amount of the accumulated carbon dioxide is estimated to be larger. The flow path control unit 10 may estimate the amount of the accumulated carbon dioxide based on the air concentration after passing, without considering the air concentration before passing. In this case, it is estimated that, as the air concentration after passing increases, the amount of the accumulated carbon dioxide increases.

After the start of the heating period, until the refill process is started, the flow path control unit 10, based on the amount of the accumulated carbon dioxide, determines whether the above-described start condition is satisfied. Specifically, the flow path control unit 10 may determine that the start condition is satisfied when the exhaust gas concentration subtraction value or the exhaust gas concentration after passing exceeds the specified threshold. If the start condition is not satisfied, then the flow path control unit 10 proceeds to S215 and continues the accumulation control. On the other hand, if the start condition is satisfied, then the flow path control unit 10 starts the refill process. In other words, the flow path control unit 10 proceeds to S210, terminates the accumulation control, and executes the supply control.

During execution of the refill process, the flow path control unit 10, based on the amount of the accumulated carbon dioxide, determines whether to switch between the accumulation control and the supply control. Here, a condition that the amount of the accumulated carbon dioxide is smaller than the specified accumulation threshold is defined as an accumulation switching condition. Also, a condition that the amount of the accumulated carbon dioxide is equal to or larger than the specified supply threshold is defined as a supply switching condition. It is noted that the following formulas are established: "accumulation threshold < start threshold"; and "accumulation threshold < supply threshold". Also, the supply threshold may be the same value as the start threshold, or a value approximately equal to the start threshold.

When the supply control is executed in the refill process, the flow path control unit 10 determines whether the accumulation switching condition is satisfied. If it is positively determined, then the flow path control unit 10 proceeds to S215, terminates the supply control, and executes the accumulation control. If it is negatively determined, then the flow path control unit 10 proceeds to S210 and continues the supply control.

When the accumulation control is executed in the refill process, the flow path control unit 10 determines whether the supply switching condition is satisfied. If it is positively determined, then the flow path control unit 10 proceeds to S210, terminates the accumulation control, and executes the supply control. If it is negatively determined, then the flow path control unit 10 proceeds to S215, and continues the supply control.

The flow path control unit 10 may compare the exhaust gas concentration subtraction value or exhaust gas concentration after passing, or air concentration subtraction value or air concentration after passing, and the specified threshold, so as to determine whether the accumulation switching condition and the supply switching condition are satisfied.

In S210, the flow path control unit 10 executes the supply control and terminates the present process. Here, in the non-heating period, the type of the supply control may be determined in accordance with the concentration of carbon dioxide in the inside. Specifically, in case that the concentration of carbon dioxide in the inside is equal to or larger than a specified inside threshold, the low-speed supply control may be executed. In case that the concentration of carbon dioxide in the inside is smaller than the inside threshold, the high-speed supply control may be executed. As a result, it is possible to maintain the concentration of carbon dioxide in the inside to a suitable concentration for plant growth. The concentration of carbon dioxide in the inside is detected by the inside sensor 2a.

During the execution of the refill process, the high-speed supply control may be executed at all times. Of course, the low-speed supply control may be executed at all times. Also, for example, as in the non-heating period, the high-speed supply control or the low-speed supply control may be executed.

In S215, the flow path control unit 10 executes the accumulation control, and terminates the present process. The flow path control unit 10, in case that the aqueous solutions stored in the first and second water tanks have high temperature, may execute the cooling control, instead of the accumulation control. The flow path control unit 10, after the temperatures of the aqueous solutions are sufficiently decreased, may execute the accumulation control.

### [Effect]

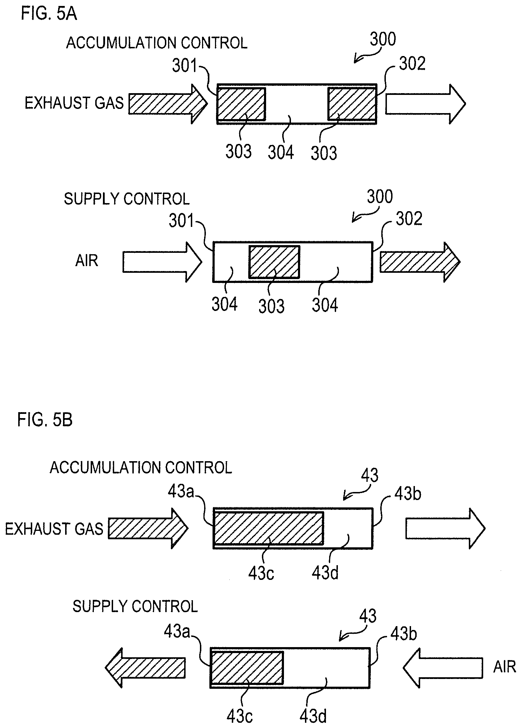

(1) In the carbon dioxide supply device 1 of the present embodiment, as the amount of the carbon dioxide accumulated in the accumulation unit 40 increases during the accumulation control in the heating period, the refill process is started. By the refill process, carbon dioxide is supplied and accumulated alternately. Therefore, it is possible to make the total amount of carbon dioxide accumulated in the accumulation unit 40 during the heating period larger than the capacity of the accumulation unit 40. Also, over the execution period of the refill process and the non-heating period, it is possible to supply carbon dioxide more than the capacity of the accumulation unit 40 to the inside. In other words, it is possible to supply more carbon dioxide produced by the heating to the inside through the accumulation unit 40. Therefore, it is possible to effectively use carbon dioxide produced by the heating.
   Especially, in order to increase an amount of supply of carbon dioxide to the inside, it is necessary to increase the size of the accumulation unit 40. However, in order to increase a crop planting area in the greenhouse 2, downsizing of the carbon dioxide supply device 1 is required. In contrast, in the carbon dioxide supply device 1 of the present embodiment, the refill process is executed. As a result, the amount of supply of carbon dioxide to the inside can be increased, and downsizing of the accumulation unit 40 becomes possible.
(2) The refill process is started when the amount of carbon dioxide accumulated in the accumulation unit 40 in the heating period reaches the start threshold. As a result, it is possible to start the refill process at a more appropriate timing.
(3) During the accumulation control in the refill process, when the amount of the accumulated carbon dioxide reaches the supply threshold, the accumulation control is switched to the supply control. Also, during the supply control in the refill process, when the amount of the accumulated carbon dioxide falls below the accumulation threshold, the supply control is switched to the accumulation control. Therefore, in the refill process, it is possible to start the supply control and the accumulation control at a more appropriate timing.
(4) In the refill process, the high-speed supply control is executed as the supply control. Therefore, carbon dioxide accumulated in the accumulation unit 40 can flow out more quickly. As a result, in the refill process, switching from the supply control to the accumulation control can be made earlier. Therefore, more carbon dioxide can be supplied to the inside through the accumulation unit 40.
(5) On an outer surface of an adsorption unit 300 in FIG. 5A configured in the same manner as the adsorption unit 43 of the present embodiment, a portion through which the exhaust gas or air that flows into the adsorption unit 300 passes is defined as an inflow surface 301, and a portion through which the exhaust gas or air that flows out from the adsorption unit 300 passes is defined as an outflow surface 302. Also, it is assumed that the inflow surface 301 and the outflow surface 302 in the accumulation control are the same as the inflow surface 301 and the outflow surface 302 in the supply control, respectively. It is also assumed that the accumulation control and the supply control are executed alternately in a short cycle. At this time, in the adsorption unit 300, there is a possibility that a high concentration portion 303 having high concentration of carbon dioxide and a low concentration portion 304 having low concentration of carbon dioxide are distributed in a multilayered manner from the inflow surface 301 to the outflow surface 302.

During the supply control, the high concentration portion 303 and the low concentration portion 304 in the adsorption unit 300 move from the inflow surface 301 to the outflow surface 302 of air. In case that the low concentration portion 304 is in contact with the outflow surface 302, it is considered that the concentration of carbon dioxide flowing out from the adsorption unit 300 decreases. On the other hand, in case that the high concentration portion 303 is in contact with the outflow surface 302, it is considered that the concentration of carbon dioxide flowing out from the adsorption unit 300 increases. Therefore, when the high concentration portion 303 and the low concentration portion 304 are distributed in a multilayered manner in the adsorption unit 300, the concentration of carbon dioxide flowing out from the adsorption unit 300 may become unstable.

In contrast, as shown in FIG. 5B, the accumulation surface 43a of the adsorption unit 43 is the inflow surface of the exhaust gas, and the supply surface 43b is the outflow surface of the exhaust gas, during the accumulation control in the present embodiment. Contrary to the above, during the supply control, the supply surface 43b is the inflow surface of the air, and the accumulation surface 43a is the outflow surface of the air. Therefore, even if the accumulation control and the supply control are executed alternately in a short cycle, it is possible to maintain the adsorption unit 43 such that the high concentration portion 43c is on the accumulation surface 43a side and the low concentration portion 43d is on the supply surface 43b side. As a result, during the supply control, fluctuation in the concentration of carbon dioxide flowing out from the accumulation surface 43a of the adsorption unit 43 can be suppressed. Therefore, it is possible to supply carbon dioxide at a stable concentration.

### [Other embodiments]

(1) The start condition of the refill process in the present embodiment is that the amount of carbon dioxide accumulated in the accumulation unit 40 is equal to or more than the start threshold. However, for example, the start condition may be that a duration of the accumulation control in the heating period reaches a specified start threshold. Also, for example, the start condition may be that a specified start time arrives. In other words, in case that the accumulation control is executed over a certain period of time, it may be considered that the amount of the accumulated carbon dioxide has reached a specified level.

The start threshold or the start time may be set, for example, by a user. Also, for example, the carbon dioxide supply device 1 may obtain time of dawn from outside via a network, and determine the start threshold or the start time based on the time of dawn. Also, for example, the carbon dioxide supply device 1 may predict time of dawn based on the current month, day, etc., and determine the start threshold or the start time based on a result of the prediction.

In addition, the start condition may be, for example, that the carbon dioxide supply device 1 accepts a specified start operation from the user via an operation unit. The operation unit may be, for example, a switch or the like provided in the carbon dioxide supply device 1. The operation unit may be, for example, an operation terminal that notifies the carbon dioxide supply device 1 of contents of operation accepted by the operation terminal via wired communication or wireless communication. More specifically, the operation terminal may be, for example, a remote terminal, a mobile terminal such as a smartphone, a PC or the like.

The start condition may be based on an external environment of the greenhouse 2. In other words, in case that it is estimated that dawn has come or dawn is approaching based on the external environment, it may be considered that the start condition is satisfied. Specifically, for example, in case that temperature and/or illuminance detected by a sensor reaches a specified threshold, it may be considered that the start condition has been satisfied.

In a case of using the start condition as above, the accumulation unit 40 may not be provided with the accumulation surface sensor 45 and the supply surface sensor 46.

In the refill process, the supply switching condition for switching the accumulation control to the supply control is that the amount of the accumulated carbon dioxide is equal to or larger than the supply threshold. However, the supply switching condition may be, for example, that elapsed time from the start of the accumulation control in execution is equal to or larger than a specified supply switching threshold. Similarly, in the refill process, the accumulation switching condition for switching the supply control to the accumulation control is that the amount of the accumulated carbon dioxide is smaller than the accumulation threshold. However, the accumulation switching condition may be, for example, that elapsed time from the start of the supply control in execution is equal to or larger than a specified accumulation switching threshold.

(2) In the present embodiment, the flow path control unit 10 opens or closes the first inside valve 64 in the supply control. As a result, the type of supply control is determined. However, the flow path control unit 10 may adjust a degree of opening of the first inside valve 64 at three or more levels in the supply control. Then, the flow path control unit 10, when executing the supply control in the refill process, may set the degree of opening of the first inside valve 64 to be smaller than a specified threshold. In other words, the amount of the air passing through the accumulation unit 40 during the supply control in the refill process may be made larger than a specified level. In such a case as well, it is possible to flow out carbon dioxide accumulated in the accumulation unit 40 quickly during the supply control in the refill process.

(3) In the present embodiment, the casing 42 of the adsorption member 41 of the accumulation unit 40 and the arrangement area in the casing 42 have a linearly extending elongated shape. Also, the adsorption unit 43 arranged in the arrangement area has the same shape as the arrangement area. However, for example, the arrangement area and the adsorption unit 43 may have a curved or bent elongated shape. Also, as in the present embodiment, the adsorption unit 43 may have the accumulation surface at one end, and have the supply surface at the other end. The arrangement area and the adsorption unit 43 can have various shapes which are not limited to elongated shapes. In such a case, for example, two facing areas on the outer surface of the adsorption unit 43 may be the accumulation surface and the supply surface.

### [Correspondence with claims]

The flow path control unit 10, the blower 30, and the valves 60 to 65 in the carbon dioxide supply device 1 of present embodiment correspond to an example of a control unit. Also, the accumulation surface sensor 45 and the supply surface sensor 46 correspond to an example of a detection unit.

## Claims

1. A carbon dioxide supply device (1) that accumulates carbon dioxide included in an exhaust gas produced by combustion for heating a greenhouse (2) for cultivating plants, the device comprising:
an accumulation unit (40) that accumulates carbon dioxide included in the exhaust gas;
an accumulation flow path (100) that guides the exhaust gas to the accumulation unit (40);
a supply flow path (102, 103) that guides air to the accumulation unit (40), and guides the air that has passed through the accumulation unit to the greenhouse;
a control unit (10, 30, 60-65) that controls flow of the exhaust gas and the air;
a bypass flow path (103a) that guides part of the air, guided by the supply flow path (102, 103) to the accumulation unit (40), to the greenhouse (2) without passing through the accumulation unit; and
a sensor (2a) that detects concentration of carbon dioxide in the green house (2),
the control unit (10, 30, 60-65), during a heating period in which the heating is performed, executing accumulation control in which the exhaust gas produced by the heating is caused to pass through the accumulation unit (40) via the accumulation flow path (100), so as to accumulate carbon dioxide included in the exhaust gas in the accumulation unit,
the control unit (10, 30, 60-65), during a period in which the heating is not performed, executing supply control in which the air is caused to pass through the accumulation unit (40) via the supply flow path (102, 103) and then to flow into the greenhouse (2), so as to supply carbon dioxide accumulated in the accumulation unit to the greenhouse, and
the control unit (10, 30, 60-65) further executing a refill process in which the supply control and the accumulation control are executed alternately when a specified start condition is satisfied during the accumulation control in the heating period,
the control unit (10, 30, 60-65), in the supply control, adjusting an amount of the air guided by the bypass flow path (103a) so as to adjust the amount of the air passing through the accumulation unit (40),
the control unit (10, 30, 60-65) executing, as the supply control, high-speed supply control and low-speed supply control in which the amount of the air passing through the accumulation unit (40) is smaller than the amount in the high-speed supply control, and
the control unit (10, 30, 60-65) executing the high-speed supply control in the refill process whereas the control unit (10, 30, 60-65), during the period in which the heating is not performed, executes the high-speed supply control or the low-speed supply control in accordance with the concentration of carbon dioxide in the greenhouse (2) detected by the sensor (2a).

2. The carbon dioxide supply device (1) according to claim 1, further comprising:
a detection unit (45, 46) that detects an amount of carbon dioxide accumulated in the accumulation unit (40),
wherein the start condition is that the amount of the accumulated carbon dioxide detected by the detection unit (45, 46) reaches a specified threshold.

3. The carbon dioxide supply device (1) according to claim 1,
wherein the start condition is that a duration of time during which the accumulation control is executed reaches a specified threshold.

4. The carbon dioxide supply device (1) according to claim 1,
wherein the start condition is that a specified time arrives.

5. The carbon dioxide supply device (1) according to any one of claims 1 to 4, further comprising:
a detection unit (45, 46) that detects the amount of carbon dioxide accumulated in the accumulation unit (40),
wherein, in the refill process, the control unit (10, 30, 60-65) starts the supply control when the amount of the accumulated carbon dioxide detected by the detection unit (45, 46) reaches a specified supply threshold during the accumulation control, and starts the accumulation control when the amount of the accumulated carbon dioxide detected by the detection unit falls below a specified accumulation threshold during the supply control, and
wherein the accumulation threshold is smaller than the supply threshold.

6. The carbon dioxide supply device (1) according to any one of claims 1 to 5,
wherein the accumulation unit (40) includes at least one adsorption unit (43) that adsorbs carbon dioxide,
wherein the at least one adsorption unit (43) includes an accumulation surface (43a) and a supply surface (43b) on its outer surface,
wherein, in the accumulation control, the exhaust gas passing through the accumulation unit (40) flows into the at least one adsorption unit (43) through the accumulation surface (43a) and then flows out from the adsorption unit through the supply surface (43b), so that carbon dioxide included in the exhaust gas is adsorbed by the adsorption unit and the carbon dioxide is accumulated in the accumulation unit, and
wherein, in the supply control, the air passing through the accumulation unit (40) flows into the at least one adsorption unit (43) through the supply surface (43b) and then flows out from the adsorption unit through the accumulation surface (43a), so that carbon dioxide adsorbed by the adsorption unit flows out with the air and carbon dioxide accumulated in the accumulation unit is supplied to the greenhouse (2).

## Patentansprüche

1. Kohlendioxidversorgungsvorrichtung (1), die Kohlendioxid akkumuliert, das in einem Abgas, das durch Verbrennung zum Erwärmen eines Treibhauses (2) zum Kultivieren von Pflanzen produziert wird, enthalten ist, wobei die Vorrichtung umfasst:
eine Akkumulationseinheit (40), die Kohlendioxid akkumuliert, das in dem Abgas enthalten ist;
einen Akkumulationsflusspfad (100), der das Abgas zu der Akkumulationseinheit (40) führt;
einen Versorgungsflusspfad (102, 103), der Luft zu der Akkumulationseinheit (40) führt und die Luft, die die Akkumulationseinheit durchlaufen hat, zu dem Treibhaus führt;
eine Steuereinheit (10, 30, 60-65), die den Fluss des Abgases und der Luft steuert;
einen Umgehungsflusspfad (103a), der einen Teil der Luft, der von dem Versorgungsflusspfad (102, 103) zu der Akkumulationseinheit (40) geführt wird, zu dem Treibhaus (2) führt, ohne die Akkumulationseinheit zu durchlaufen; und
einen Sensor (2a), der die Konzentration von Kohlendioxid in dem Treibhaus (2) detektiert,
wobei die Steuereinheit (10, 30, 60-65) während einer Heizperiode, in der das Heizen durchgeführt wird, Akkumulationssteuerung ausführt, bei der bewirkt wird, dass das durch das Heizen produzierte Abgas die Akkumulationseinheit (40) über den Akkumulationsflusspfad (100) durchläuft, um so Kohlendioxid,
das in dem Abgas enthalten ist, in der Akkumulationseinheit zu akkumulieren,
wobei die Steuereinheit (10, 30, 60-65) während einer Periode, in der kein Heizen durchgeführt wird, Versorgungssteuerung ausführt, bei der bewirkt wird, dass die Luft die Akkumulationseinheit (40) über den Versorgungsflusspfad (102, 103) durchläuft und dann in das Treibhaus (2) fließt, um so das Treibhaus mit Kohlendioxid, das in der Akkumulationseinheit akkumuliert wurde, zu versorgen, und
die Steuereinheit (10, 30, 60-65) des Weiteren einen Auffüllprozess ausführt, bei dem die Versorgungssteuerung und die Akkumulationssteuerung alternierend ausgeführt werden, wenn während der Akkumulationssteuerung in der Heizperiode eine spezifische Startbedingung erfüllt ist,
wobei die Steuereinheit (10, 30, 60-65) in der Versorgungssteuerung eine Menge der Luft anpasst, die durch den Umgehungsflusspfad (103a) geführt wird, um so die Menge der Luft anzupassen, die die Akkumulationseinheit (40) durchläuft,
wobei die Steuereinheit (10, 30, 60-65) als Versorgungssteuerung Hochgeschwindigkeitsversorgungssteuerung und Niedriggeschwindigkeitsversorgungssteuerung ausführt, wobei die Menge der Luft, die die Akkumulationseinheit (40) durchläuft, kleiner als die Menge in der Hochgeschwindigkeitssteuerung ist, und
die Steuereinheit (10, 30, 60-65) die Hochgeschwindigkeitsversorgungssteuerung in dem Auffüllprozess ausführt, wobei die Steuereinheit (10, 30, 60-65) während der Periode, in der kein Heizen durchgeführt wird, die Hochgeschwindigkeitsversorgungssteuerung oder die Niedriggeschwindigkeitsversorgungssteuerung entsprechend der Konzentration von Kohlendioxid in dem Treibhaus (2), die durch den Sensor (2a) detektiert wird, ausführt.

2. Kohlendioxidversorgungsvorrichtung (1) nach Anspruch 1, des Weiteren umfassend:
eine Detektierungseinheit (45, 46), die eine Menge des Kohlendioxids detektiert, die in der Akkumulationseinheit (40) akkumuliert wurde,
wobei die Startbedingung diejenige ist, dass die durch die Detektierungseinheit (45, 46) detektierte Menge des akkumulierten Kohlendioxids einen spezifischen Schwellenwert erreicht.

3. Kohlendioxidversorgungsvorrichtung (1) nach Anspruch 1,
wobei die Startbedingung diejenige ist, dass eine Zeitdauer, während der die Akkumulationssteuerung ausgeführt wird, einen spezifischen Schwellenwert erreicht.

4. Kohlendioxidversorgungsvorrichtung (1) nach Anspruch 1,
wobei die Startbedingung diejenige ist, dass eine spezifizierte Zeit gekommen ist.

5. Kohlendioxidversorgungsvorrichtung (1) nach einem der Ansprüche 1 bis 4, des Weiteren umfassend:
eine Detektierungseinheit (45, 46), die die Menge des Kohlendioxids detektiert, die in der Akkumulationseinheit (40) akkumuliert wurde,
wobei die Steuereinheit (10, 30, 60-65) in dem Auffüllprozess die Versorgungssteuerung startet, wenn die Menge des akkumulierten Kohlendioxids, die durch die Detektierungseinheit (45, 46) detektiert wird, während der Versorgungssteuerung einen spezifizierten Versorgungsschwellenwert erreicht, und die Akkumulationssteuerung startet, wenn die Menge des akkumulierten Kohlendioxids, die durch die Detektierungseinheit detektiert wird, während der Versorgungssteuerung unter einen spezifizierten Akkumulationsschwellenwert fällt, und
wobei der Akkumulationsschwellenwert kleiner als der Versorgungsschwellenwert ist.

6. Kohlendioxidversorgungsvorrichtung (1) nach einem der Ansprüche 1 bis 5,
wobei die Akkumulationseinheit (40) mindestens eine Adsorptionseinheit (43) enthält, die Kohlendioxid adsorbiert,
wobei die mindestens eine Adsorptionseinheit (43) eine Akkumulationsoberfläche (43a) und eine Versorgungsoberfläche (43b) auf ihrer Außenoberfläche enthält,
wobei in der Akkumulationssteuerung das Abgas, welches die Akkumulationseinheit (40) durchläuft, durch die Akkumulationsoberfläche (43a) hindurch in die mindestens eine Adsorptionseinheit (43) fließt und dann aus der Adsorptionseinheit durch die Versorgungsoberfläche (43b) herausfließt, so dass Kohlendioxid, das in dem Abgas enthalten ist, durch die Adsorptionseinheit adsorbiert wird und das Kohlendioxid in der Akkumulationseinheit akkumuliert wird, und
wobei in der Versorgungssteuerung die Luft, die die Akkumulationseinheit (40) durchläuft, durch die Versorgungsoberfläche (43b) in die mindestens eine Adsorptionseinheit (43) fließt und dann aus der Adsorptionseinheit durch die Akkumulationsoberfläche (43a) herausfließt, so dass Kohlendioxid, das durch die Adsorptionseinheit adsorbiert wird, mit der Luft herausfließt und das Treibhaus (2) mit Kohlendioxid, das in der Akkumulationseinheit akkumuliert wurde, versorgt wird.

## Revendications

1. Dispositif d'alimentation en dioxyde de carbone (1) qui accumule du dioxyde de carbone contenu dans un gaz d'échappement produit par combustion pour chauffer une serre (2) destinée à cultiver des plantes, le dispositif comprenant :
une unité d'accumulation (40) qui accumule du dioxyde de carbone contenu dans le gaz d'échappement ;
un passage d'accumulation (100) qui guide le gaz d'échappement jusqu'à l'unité d'accumulation (40) ;
un passage d'alimentation (102, 103) qui guide de l'air jusqu'à l'unité d'accumulation (40), et guide l'air qui est passé par l'unité d'accumulation jusqu'à la serre ;
une unité de commande (10, 30, 60-65) qui commande l'écoulement du gaz d'échappement et de l'air ;
un passage de contournement (103a) qui guide une partie de l'air, guidé par le passage d'alimentation (102, 103) jusqu'à l'unité d'accumulation (40), jusqu'à la serre (2) sans passer par l'unité d'accumulation (40) ; et
un capteur (2a) qui détecte la concentration de dioxyde de carbone dans la serre (2),
l'unité de commande (10, 30, 60-65), pendant une période de chauffage dans laquelle le chauffage est effectué, exécutant une commande d'accumulation dans laquelle le gaz d'échappement produit par le chauffage est amené à passer par l'unité d'accumulation (40) par le biais du passage d'accumulation (100), de manière à accumuler du dioxyde de carbone contenu dans le gaz d'échappement dans l'unité d'accumulation,
l'unité de commande (10, 30, 60-65), pendant une période dans laquelle le chauffage n'est pas effectué, exécutant une commande d'alimentation dans laquelle l'air est amené à passer par l'unité d'accumulation (40) par le biais du passage d'alimentation (102, 103) et ensuite à s'écouler à l'intérieur de la serre (2), de manière à alimenter la serre en dioxyde de carbone accumulé dans l'unité d'accumulation, et
l'unité de commande (10, 30, 60-65) exécutant en outre un processus de remplissage dans lequel la commande d'alimentation et la commande d'accumulation sont exécutées en alternance quand une condition de départ spécifiée est satisfaite pendant la commande d'accumulation dans la période de chauffage,
l'unité de commande (10, 30, 60-65), dans la commande d'alimentation, réglant une quantité de l'air guidé par le passage de contournement (103a) de manière à régler la quantité de l'air passant par l'unité d'accumulation (40),
l'unité de commande (10, 30, 60-65) exécutant, comme commande d'alimentation, une commande d'alimentation à grande vitesse et une commande d'alimentation à petite vitesse dans lequel la quantité de l'air passant par l'unité d'accumulation (40) est inférieure à la quantité dans la commande d'alimentation à grande vitesse, et
l'unité de commande (10, 30, 60-65) exécutant la commande d'alimentation à grande vitesse dans le processus de remplissage alors que l'unité de commande (10, 30, 60-65), pendant la période dans laquelle le chauffage n'est pas effectué, exécute la commande d'alimentation à grande vitesse ou la commande d'alimentation à petite vitesse en fonction de la concentration de dioxyde de carbone dans la serre (2) détectée par le capteur (2a).

2. Dispositif d'alimentation en dioxyde de carbone (1) selon la revendication 1, comprenant en outre :
une unité de détection (45, 46) qui détecte une quantité de dioxyde de carbone accumulé dans l'unité d'accumulation (40),
dans lequel la condition de départ est le fait que la quantité du dioxyde de carbone accumulé détectée par l'unité de détection (45, 46) atteint un seuil spécifié.

3. Dispositif d'alimentation en dioxyde de carbone (1) selon la revendication 1,
dans lequel la condition de départ est le fait qu'une durée pendant laquelle la commande d'accumulation est exécutée atteint un seuil spécifié.

4. Dispositif d'alimentation en dioxyde de carbone (1) selon la revendication 1,
dans lequel la condition de départ est le fait qu'un temps spécifié arrive.

5. Dispositif d'alimentation en dioxyde de carbone (1) selon l'une quelconque des revendications 1 à 4, comprenant en outre :
une unité de détection (45, 46) qui détecte la quantité de dioxyde de carbone accumulé dans l'unité d'accumulation (40),
dans lequel, dans le processus de remplissage, l'unité de commande (10, 30, 60-65) lance la commande d'alimentation quand la quantité du dioxyde de carbone accumulé détectée par l'unité de détection (45, 46) atteint un seuil d'alimentation spécifié pendant la commande d'accumulation, et lance la commande d'accumulation quand la quantité du dioxyde de carbone accumulé détectée par l'unité de détection chute en dessous d'un seuil d'accumulation spécifié pendant la commande d'alimentation, et
dans lequel le seuil d'accumulation est inférieur au seuil d'alimentation.

6. Dispositif d'alimentation en dioxyde de carbone (1) selon l'une quelconque des revendications 1 à 5,
dans lequel l'unité d'accumulation (40) comporte au moins une unité d'adsorption (43) qui adsorbe du dioxyde de carbone,
dans lequel l'au moins une unité d'adsorption (43) comporte une surface d'accumulation (43a) et une surface d'alimentation (43b) sur sa surface externe,
dans lequel, dans la commande d'accumulation, le gaz d'échappement passant par l'unité d'accumulation (40) s'écoule à l'intérieur de l'au moins une unité d'adsorption (43) par la surface d'accumulation (43a) et s'écoule ensuite hors de l'unité d'adsorption par la surface d'alimentation (43b), de telle sorte que du dioxyde de carbone contenu dans le gaz d'échappement est adsorbé par l'unité d'adsorption et le dioxyde de carbone est accumulé dans l'unité d'accumulation, et
dans lequel, dans la commande d'alimentation, l'air passant par l'unité d'accumulation (40) s'écoule à l'intérieur de l'au moins une unité d'adsorption (43) par la surface d'alimentation (43b) et s'écoule ensuite hors de l'unité d'adsorption par la surface d'accumulation (43a), de telle sorte que le dioxyde de carbone adsorbé par l'unité d'adsorption s'écoule à l'extérieur avec l'air et le dioxyde de carbone accumulé dans l'unité d'accumulation alimente la serre (2).
